# EUROPEAN PATENT APPLICATION

(11) **EP 4 786 812 A1**
(43) Date of publication of application: **05.08.2026**
(21) Application number: 24885663.5
(22) Date of filing: 28.10.2024
(51) Int. Cl.: F16C 33/46, F16C 19/26

(54) **RETAINER-EQUIPPED ROLLER**

(30) Priority: 02.11.2023 JP 2023188815
(71) Applicant: NTN Corporation, Osaka-shi Osaka 530-0005 (JP)
(72) Inventor: WATANABE, Kota, Kuwana-shi, Mie 511-8678 (JP)
(74) Representative: dompatent
(86) International application number: PCT/JP2024/038349
(87) International publication number: WO 2025/094890

(57) **Abstract**

Provided is a roller-cage assembly that includes a plurality of rollers, a cage (2) in which the rollers are retained, and a roller retainer claw (6). The cage (2) includes a pair of ring members (4) facing axial opposite ends of each of the rollers and a plurality of bars (5) which are provided at circumferential uniform intervals in such a way to bridge outer diameter areas of the pair of ring members (4) and between which the rollers are received. A ratio of the cage radial chamfer length (B) to the cage thickness (A) satisfies a relation: 0 < B/A ≤ 1.6. The roller retainer claw (6) is provided on an inner diameter portion of each of the ring members (4) to prevent the rollers from slipping through to an inner diameter side of the cage.

## Description

### CROSS REFERENCE TO THE RELATED APPLICATION

This application is based on and claims Convention priority to a Japanese patent application No. 2023-188815, filed November 02, 2023, the entire disclosure of which is herein incorporated by reference as a part of this application.

### BACKGROUND OF THE INVENTION

### (Field of the Invention)

The present invention relates, for example, to a retainer-equipped roller, i.e., a roller-cage assembly for use in a double-row configuration.

### (Description of Related Art)

The roller occupancy in a roller-cage assembly needs to be higher to ensure a sufficient load capacity for the assembly. Typically, bars on the inner diameter side of the cage of a roller-cage assembly can be omitted to achieve higher roller occupancy and thereby ensure a sufficient load capacity for the assembly. However, the resulting roller-cage assembly may suffer from poor assemblability to machinery, as rollers can, now, displace towards the inner diameter side of the cage.

Further, when there are two roller-cage assemblies operating in a double-row configuration, a supporting mechanism needs to be present on the machinery to address a thrust force resulting from a thrust direction component of force - hereinafter referred to as an induced thrust force - that is caused by the skew of rollers in each of the roller-cage assemblies.

For use in such a double-row configuration, a roller-cage assembly should have a high load capacity as well as excellent assemblability to machinery, and be able to promote fewer parts count.

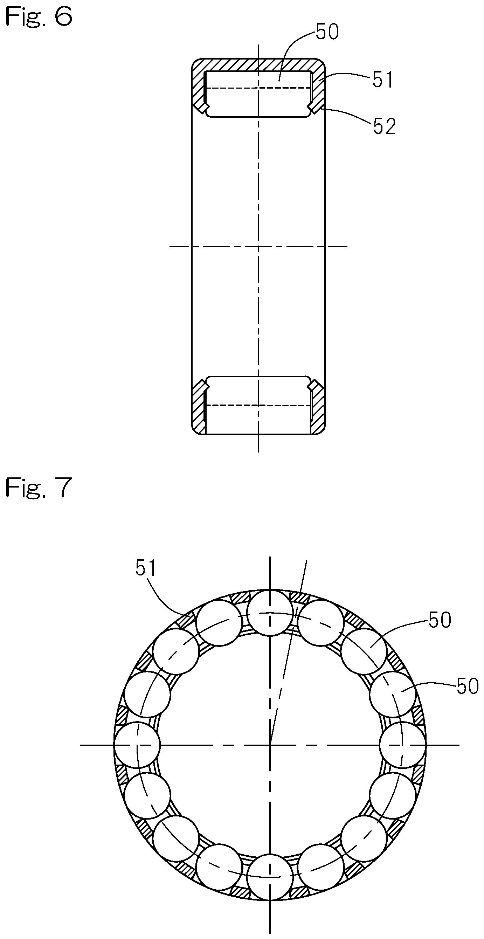

Referring to Fig. 6, a cage from one conventional example has an annular body 51 with inner diameter portions that are provided with roller retainer claws 52 between neighboring rollers 50 to prevent the rollers 50 from slipping through to the inner diameter side of the cage (Patent Document 1). Further, as can be seen in Fig. 7, occupancy by the rollers 50 is defined therein to be 80% or higher. As a result of these features, this roller-cage assembly not only ensures a sufficient load capacity but also has assemblability to machinery.

In another conventional example, an end face 53a of rollers 53 is made to be planar as shown in Fig. 8 (Patent Document 2). As a result of this feature, a longer contact length can be provided, and a high load capacity can therefore be ensured. In addition, one of the faces 54a of a spacer 54, which is arranged in opposition to the end face 53a of the rollers 53, is made in a tapered shape. As a result of this feature, the sliding area between an end part of the rollers 53 and the spacer 54 can be reduced, and, thus, the sliding resistance during operation can be advantageously lowered.

### [Related Document]

### [Patent Document]

[Patent Document 1] JP Laid-open Patent Publication No. 2005-106211
[Patent Document 2] JP Laid-open Patent Publication No. 2009-216112

### SUMMARY OF THE INVENTION

The roller-cage assembly in Patent Document 1 has a high load capacity as well as improved assemblability to devices. This is achieved by providing the assembly with roller retainer claws on the inner diameter side of the cage and setting its roller occupancy to be 80% or higher. Nevertheless, when the assembly is used in a double-row configuration, there is a risk that an induced thrust force from a neighboring roller-cage assembly may force the roller retainer claws into contact with the rollers.

In Patent Document 2, a tapered spacer is positioned in opposition to an end face of rollers to promote lower sliding resistance during operation. However, the necessity of such a spacer means more parts count.

An object of the present invention is to provide a roller-cage assembly that ensures a high load capacity and has excellent assemblability to machinery with no or little increase in parts count.

A roller-cage assembly according to the present invention includes a plurality of rollers, a cage in which the rollers are retained, and a roller retainer claw. The cage includes a pair of ring members facing axial opposite ends of each of the rollers and a plurality of bars which are provided at circumferential uniform intervals in such a way to bridge outer diameter areas of the pair of ring members and between which the rollers are received. Each of the bars has a radial thickness representing a cage thickness A. The cage has an outer diameter surface, an end face, and a chamfer connecting the outer diameter surface and the end face with a length of a radial extent of the chamfer being defined as a cage radial chamfer length B. A ratio of the cage radial chamfer length B to the cage thickness A satisfies a relation: 0 < B/A ≤ 1.6. The roller retainer claw is provided on an inner diameter portion of each of the ring members to prevent the rollers from slipping through to an inner diameter side of the cage.

The "cage thickness" mentioned above refers to the thickness of a bar in the radial direction or the thickness of a ring member in the axial direction.

The "cage radial chamfer length" mentioned above refers to the length of the radial extent of a chamfer connecting the outer diameter surface and an end face of the cage.

In this configuration, the ratio of the cage radial chamfer length B to the cage thickness A satisfies the relation: 0 < B/A ≤ 1.6. Even when subjected to a load equivalent to an induced thrust force, such a roller-cage assembly can still rotate smoothly without any contact taking place between the cage and the rollers. If the cage radial chamfer length B was too long relative to the cage thickness A, that is, if the ratio B/A exceeded 1.6, a ring member might experience a large bending moment and, accordingly, a large, axially inward deformation, leading to potential friction and wear of the cage. A chamfer as used herein refers to a slope at a corner between intersecting surfaces. This definition is in compliance with JIS B 3401. The chamfer can be shaped by many methods ranging from cutting to press working.

By having a pair of ring members and a plurality of bars, the cage takes on a so-called gantry-like shape that therefore has higher roller occupancy and can ensure a higher load capacity than, say, cages having bars on their inner diameter side. An inner diameter portion of each of the ring members is provided with a roller retainer claw, and this prevents the rollers from displacing towards the inner diameter side of the cage during assembly and helps achieve excellent assemblability to machinery. An inner diameter portion of each of the ring members provides the roller retainer claw, and thereby requires no or little addition of further components and helps reduce the cost of making sure that the rollers do not fall off.

The assembly may comprise roller-cage assemblies configured to be used in such a double-row configuration that the cage of one of the assemblies is in contact with the cage of axially adjacent one of the assemblies. The cage in this case can still rotate smoothly even with no help from an additional component, such as a spacer, that decreases sliding resistance during operation.

The assembly may be configured to be arranged in an inner diameter bore of an outer member in rolling contact with and between the outer member and a shaft in such a way to satisfy relations: C1 > C3; and C2 > C4, where C1 represents a radial clearance between an outer diameter of the shaft and an inner diameter of the roller retainer claw, C2 represents a radial clearance between an outer diameter of the roller retainer claw and an intersection of a radially outer extension of the outer diameter of the roller retainer claw with the rollers, C3 represents a radial clearance between an inner diameter of the bars and an intersection of a radially inner extension of the inner diameter of the bars with the rollers, and C4 represents a radial clearance between an inner diameter of the outer member and an outer diameter of the bars.

It is contemplated to provide a sufficient clearance in the cage of the roller-cage assembly in order to prevent the roller retainer claw of the cage from contacting the rollers or the shaft during operation. In the configuration above, by satisfying the relations: C1 > C3; and C2 > C4, a smooth operation can be achieved without any contact taking place between the roller retainer claw and the rollers or shaft.

A lateral face of the ring members, which represents the end face of the cage, may have a surface roughness Rmax of no more than 12.5 s. In this case, too, a smooth operation can be achieved.

The roller retainer claw may be an inner diameter portion of each of the ring members that is provided as a bent piece between neighboring rollers among the rollers. In this case, a bending operation for the roller retainer claw is performed after the incorporation of the rollers to make sure that the rollers cannot displace relative to the cage. This also contributes to excellent assemblability to machinery.

The roller-cage assemblies configured to be used in the double-row configuration may be configured to be inserted onto an eccentric shaft. In this case, the roller-cage assemblies can be employed in a double-row configuration under a high load condition involving an eccentric motion.

Any combinations of at least two features disclosed in the claims and/or the specification and/or the drawings should also be construed as encompassed by the present invention. Especially, any combinations of two or more of the claims should also be construed as encompassed by the present invention.

### BRIEF DESCRIPTION OF THE DRAWINGS

The present invention will be more clearly understood from the following description of preferred embodiments made in connection with the accompanying drawings. However, the embodiments and the drawings are given merely for the purpose of illustration and explanation, and should not be used to delimit the scope of the present invention, which scope is to be delimited by the appended claims. In the accompanying drawings, alike symbols are assigned to and indicate alike or corresponding parts throughout the different figures:
Fig. 1 shows a perspective view of a roller-cage assembly in accordance with a first embodiment of the present invention;
Fig. 2 shows a longitudinal cross section of the roller-cage assembly when used in a double-row configuration;
Fig. 3A shows an enlarged cross section of a cage of the roller-cage assembly;
Fig. 3B shows the concept of an alternative embodiment of the cage;
Fig. 4 shows a fragmentally enlarged view of the part indicated with the symbol IV in Fig. 3A;
Fig. 5 shows a transverse cross section of a portion of interest of the roller-cage assembly;
Fig. 6 shows a longitudinal cross section of a roller-cage assembly from one conventional example;
Fig. 7 shows a transverse cross section of the roller-cage assembly; and

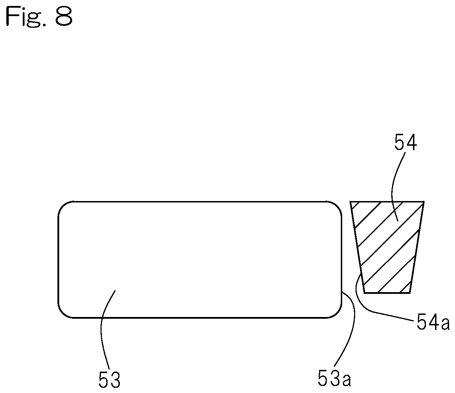

Fig. 8 shows a roller and a spacer from another conventional example.

### DESCRIPTION OF EMBODIMENTS

### [First Embodiment]

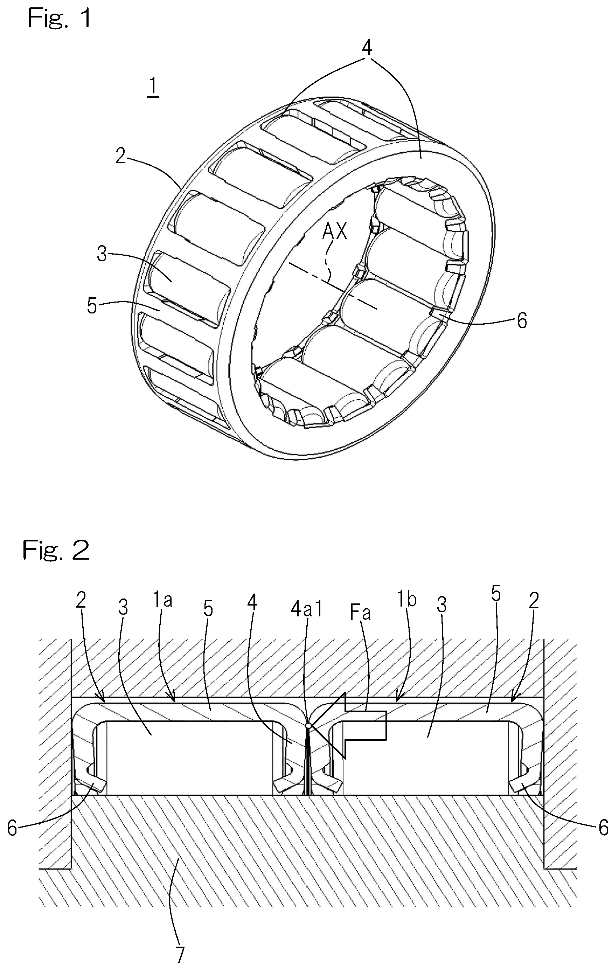

A roller-cage assembly according to an embodiment of the present invention will be described in conjunction with Figs. 1 to 5. For example, the roller-cage assembly is used in a double-row configuration in machinery, vehicles, and other more applications. However, the roller-cage assembly can even be used in a single-row configuration.

### <General Structure of Roller-Cage Assembly>

Referring to Fig. 1, the roller-cage assembly 1 includes a cage 2 and a plurality of rollers 3. The cage 2 in which the plurality of rollers 3 are retained includes a pair of ring members 4 and a plurality of bars 5. The pair of ring members 4 face the axial opposite ends of each of the rollers 3. In other words, the pair of ring members 4 represent a pair of annular members facing towards each other at an axial distance.

The plurality of bars 5 are provided at circumferential uniform intervals in such a way to bridge the outer diameter areas of the pair of ring members 4. Pockets are defined between circumferentially neighboring bars 5 and 5 among the bars to receive the rollers 3. A roller retainer claw 6 is provided on an inner diameter portion of each of the ring members 4 to prevent the rollers 3 from slipping through to the inner diameter side of the cage. For example, the rollers 3 may be made from bearing steel and can be needle rollers. Alternatively, the rollers 3 can be cylindrical rollers.

In the specification, the "axial" and "axial direction" refer to a direction parallel to the axis AX of the roller-cage assembly 1 or a direction along the axis AX. The "radial" and "radial direction" refer to a direction perpendicular to a straight line defining the "axial direction".

Referring to Fig. 2, the roller-cage assembly can be used by being inserted onto a shaft 7 in a double-row configuration such that two roller-cage assemblies 1a and 1b are arranged next to each other in the axial direction. The shaft 7 can be an eccentric shaft. The roller-cage assemblies 1a and 1b are used in the double-row configuration in such a way that the cage of one of the assemblies is in contact with the cage of the other, axially adjacent one of the assemblies. During operation, one of the axially arranged roller-cage assemblies 1a bears an induced thrust force Fa from the other of the axially arranged roller-cage assemblies 1b, at a radial chamfer point 4a1 of the cage 2. The radial chamfer point 4a1 denotes a point of the cage 2 with a maximum width dimension (or axial dimension).

### <Cage>

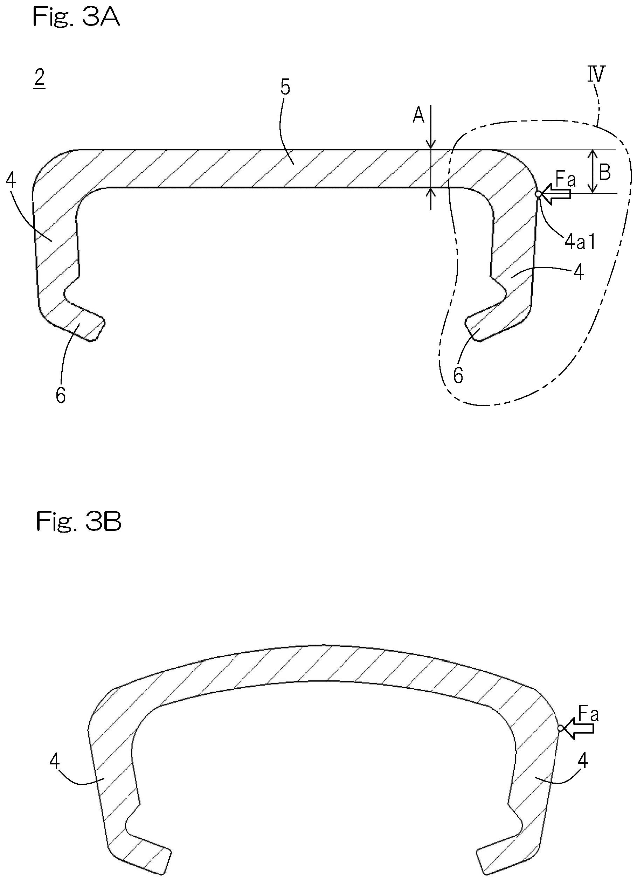

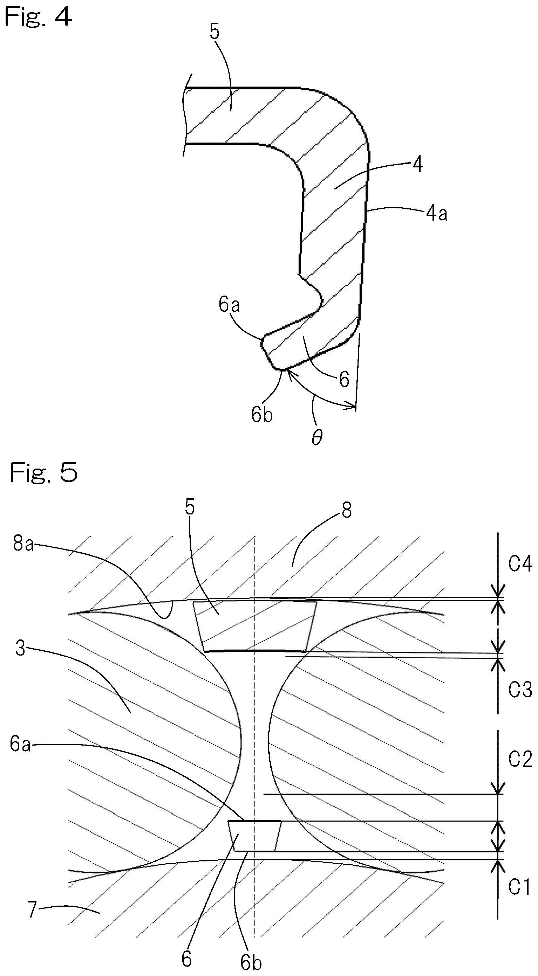

The bars 5 extend along the axial direction and are provided to define a larger diameter than the pitch circle diameter of the arrangement of the rollers. Referring to Fig. 3A, the roller retainer claw 6 is an inner diameter portion of each of the ring members 4 that is provided as a bent piece between neighboring rollers among the rollers. Referring to Fig. 4, the roller retainer claw 6 slants axially inwards as it extends towards the inner diameter side thereof. The bend angle θ of the roller retainer claw 6 relative to a ring member 4 is, for example, between 30 and 90 degrees.

### <Manufacturing Method>

Still referring to Fig. 3A, for example, a cage blank can be ground out of a pipe-shaped material and subjected to a press working operation, a welding operation, or other such operation to be formed into a gantry-like shape. Then, the cage blank is subjected, by itself, to a known heat treatment to provide a cage having a defined hardness. After the rollers are incorporated into the heat-treated cage, an inner diameter portion of each of the ring members 4 is bent towards the axially inner side. This bending step can be carried out by a press working operation, a metal spinning operation, or other such operation. In this way, the roller retainer claw 6 is provided on an inner diameter portion of each of the ring members 4.

### <Cage Thickness and Radial Chamfer of Cage Outer Diameter Side>

The roller occupancy in a roller-cage assembly over the entire circumference of a cage needs to be higher to ensure a sufficient load capacity for the assembly. For higher roller occupancy, obviously, bars on the inner diameter side should be eliminated. This results in a cage having a gantry-like shape. Roller occupancy P can be calculated according to an equation: P = (d × n) / (D × π) where d represents a roller diameter, n represents the number of rollers, and D represents the pitch circle diameter of the arrangement of rollers.

Referring to Fig. 3B, a ring member 4 of a cage having a gantry-like shape may deform inwards as a result of bearing an induced thrust force Fa, thereby it being more likely for a roller retainer claw 6 (Fig. 2) to come into contact with rollers 3 (Fig. 2) and, thus, hinder smooth rotations.

Referring back to Fig. 3A, such a cage 2 bears an induced thrust force Fa at a radial chamfer point 4a1. If the cage radial chamfer length B is too long relative to the cage thickness A, a ring member 4 of the cage 2 may experience a large bending moment and, accordingly, a large inward deformation.

### <Testing and Observation>

In examples, several samples of a roller-cage assembly with different cage thicknesses A and cage radial chamfer lengths B were tested to observe whether they still rotate smoothly even when they were subjected to a load equivalent to an induced thrust force Fa. Furthermore, in comparative examples, roller-cage assemblies with cages having a generally identical shape to those of the examples except for the absence of roller retainer claws were prepared for similar observation purposes. In table 1, the designation "clawed" indicates the examples while the designation "unclawed" indicates the comparative examples. For the cage thicknesses A, the thickness of the axial mid-point of a bar 5 was selected for measurement.

**[Table 1]**

| | | | | | | | | | | | | |
|---|---|---|---|---|---|---|---|---|---|---|---|---|
| B/A | 0.8 | 1.0 | 1.2 | 1.4 | 1.6 | 1.8 | 2.0 | 2.2 | 2.4 | 2.6 | 2.8 | 3.0 |
| clawed | Good | Good | Good | Good | Good | Poor | Poor | Poor | Poor | Poor | Poor | Not Good |
| unclawed | Good | Good | Good | Good | Good | Good | Good | Good | Good | Good | Good | Good |

Good indicates that smooth rotations were achieved, Poor indicates the presence of friction, and Not Good indicates the occurrence of wear.

Roller-cage assemblies in the examples were found to achieve smooth rotations as long as the ratio of the cage radial chamfer length B to the cage thickness A was no more than 1.6. That is, their cages were able to rotate smoothly without coming into contact with rollers when the relation: 0 < B/A ≤ 1.6 was met.

When used in a single-row configuration, a roller-cage assembly bears an induced thrust force that is caused, this time, by the skew of its own rollers, at a loading point on its own cage. Hence, the above test results also apply to single-row configurations. It should be noted that the comparative examples achieved smooth rotations without cages contacting rollers regardless of the value of the ratio B/A, yet would suffer from poor assemblability to machinery as the rollers can displace towards the inner diameter sides of the cages due to the lack of roller retainer claws.

### <Cage Clearances>

Referring to Fig. 5, it is contemplated to provide a sufficient cage clearance in order to prevent the roller retainer claw 6 of the cage from contacting the rollers 3 or the shaft 7 during operation. More specifically, the roller-cage assembly can be configured to be arranged in an inner diameter bore 8a of an outer member 8 in rolling contact with and between the outer member 8 and the shaft 7 in such a way to satisfy the following relations:
C1 > C3; and C2 > C4, where C1 represents a radial clearance between the outer diameter of the shaft 7 and the inner diameter 6b of the roller retainer claw 6, C2 represents a radial clearance between the outer diameter 6a of the roller retainer claw 6 and the intersection of a radially outer extension of the outer diameter of the roller retainer claw 6 with the rollers 3, C3 represents a radial clearance between the inner diameter 5b of the bars 5 and the intersection of a radially inner extension of the inner diameter of the bars 5 with the rollers 3, and C4 represents a radial clearance between the inner diameter 8a of the outer member 8 and the outer diameter 5a of the bars 5.

By satisfying the relations: C1 > C3; and C2 > C4, a smooth operation can be achieved without any contact taking place between the roller retainer claw 6 and the rollers 3 or shaft 7.

Referring to Fig. 4, a lateral face 4a of the ring members, which represents an end face of the cage, may have a surface roughness Rmax of no more than 12.5 s. By thus setting the maximum height Rmax in surface roughness of a lateral face 4a of the ring members to no more than 12.5 s, it is likewise possible to achieve a smooth operation.

### <Effects and Advantages>

Referring back to Fig. 3A, the ratio of the cage radial chamfer length B to the cage thickness A of the roller-cage assembly 1 shown in Fig. 1 and described thus far satisfies the relation: 0 < B/A ≤ 1.6. Even when subjected to a load equivalent to an induced thrust force, such a roller-cage assembly can still rotate smoothly without any contact taking place between the cage 2 and the rollers. If the cage radial chamfer length B was too long relative to the cage thickness A, that is, if the ratio B/A exceeded 1.6, a ring member 4 might experience a large bending moment and, accordingly, a large, axially inward deformation, leading to potential friction and wear of the cage 2.

By having a pair of ring members 4 and a plurality of bars 5, the cage 2 takes on a so-called gantry-like shape that therefore has higher roller occupancy and can ensure a higher load capacity than, say, cages having bars on their inner diameter side. An inner diameter portion of each of the ring members 4 is provided with a roller retainer claw 6, and this prevents the rollers from displacing towards the inner diameter side of the cage during assembly and helps achieve excellent assemblability to machinery. An inner diameter portion of each of the ring members 4 provides the roller retainer claw 6, and thereby requires no or little addition of further components and helps reduce the cost of making sure that the rollers do not fall off.

Referring to Fig. 2, the roller retainer claw 6 is an inner diameter portion of each of the ring members 4 that is provided as a bent piece between neighboring rollers among the rollers. Hence, a bending operation for the roller retainer claw is performed after the incorporation of the rollers to make sure that the rollers 3 cannot displace relative to the cage 2. This also contributes to excellent assemblability to machinery.

When used as roller-cage assemblies 1a and 1b of a double-row configuration and inserted onto an eccentric shaft, the roller-cage assembly 1a and the roller-cage assembly 1b can be employed in the double-row configuration under a high load condition involving an eccentric motion.

While preferred embodiments have been described thus far with reference to the drawings, a variety of additions, modifications, or omissions can be made therein without departing from the principle of the present invention and are therefore encompassed within the scope of the present invention.

### (Reference Symbols)

- 1, 1a, 1b: roller-cage assembly
- 2: cage
- 3: roller
- 4: ring member
- 5: bar
- 6: roller retainer claw
- 7: shaft
- 8: outer member

## Claims

1. A roller-cage assembly comprising:
a plurality of rollers;
a cage in which the rollers are retained, the cage including a pair of ring members facing axial opposite ends of each of the rollers and a plurality of bars provided at circumferential uniform intervals in such a way to bridge outer diameter areas of the pair of ring members, each of the bars having a radial thickness representing a cage thickness A, the cage having an outer diameter surface, an end face, and a chamfer connecting the outer diameter surface and the end face with a length of a radial extent of the chamfer being defined as a cage radial chamfer length B, and a ratio of the cage radial chamfer length B to the cage thickness A satisfying a relation: 0 < B/A ≤ 1.6; and
a roller retainer claw provided on an inner diameter portion of each of the ring members to prevent the rollers from slipping through to an inner diameter side of the cage.

2. The roller-cage assembly as claimed in claim 1, wherein the assembly comprises roller-cage assemblies configured to be used in such a double-row configuration that the cage of one of the assemblies is in contact with the cage of axially adjacent one of the assemblies.

3. The roller-cage assembly as claimed in claim 1 or 2, wherein the assembly is configured to be arranged in an inner diameter bore of an outer member in rolling contact with and between the outer member and a shaft in such a way to satisfy relations: C1 > C3; and C2 > C4, where C1 represents a radial clearance between an outer diameter of the shaft and an inner diameter of the roller retainer claw, C2 represents a radial clearance between an outer diameter of the roller retainer claw and an intersection of a radially outer extension of the outer diameter of the roller retainer claw with the rollers, C3 represents a radial clearance between an inner diameter of the bars and an intersection of a radially inner extension of the inner diameter of the bars with the rollers, and C4 represents a radial clearance between an inner diameter of the outer member and an outer diameter of the bars.

4. The roller-cage assembly as claimed in claim 1 or 2, wherein a lateral face of the ring members, which represents the end face of the cage, has a surface roughness Rmax of no more than 12.5 s.

5. The roller-cage assembly as claimed in claim 1 or 2, wherein the roller retainer claw is an inner diameter portion of each of the ring members that is provided as a bent piece between neighboring rollers among the rollers.

6. The roller-cage assembly as claimed in claim 2, wherein the roller-cage assemblies configured to be used in the double-row configuration are configured to be inserted onto an eccentric shaft.
